# EUROPEAN PATENT SPECIFICATION

(11) **EP 1 555 110 B1**
(45) Date of publication and mention of the grant of the patent: **29.09.2010**
(21) Application number: 05000460.5
(22) Date of filing: 12.01.2005
(51) Int. Cl.: B29C 65/00, B29C 45/14, B29C 47/06, C08J 5/12, C08L 27/12

(54) **Bonding of dynamic vulcanizates of fluorocarbon elastomers**
Verfahren zum Verbinden von dynamisch vulkanisierten Fluorkautschuken
Procédé de jonction des élastomères fluorocarbones vulcanisés dynamiquement

(30) Priority: 16.01.2004 US 759492
(43) Date of publication of application: 20.07.2005
(73) Proprietor: Carl Freudenberg KG, 69469 Weinheim (DE)
(72) Inventor: Park, Edward Hosung, Saline MI 48176 (US)

(56) References cited:
- EP-A- 0 168 020
- EP-A- 0 543 342
- EP-A- 0 875 522
- EP-A- 1 219 669
- WO-A-01/98405
- GB-A- 1 504 438
- US-A- 5 047 287
- US-A- 5 194 335
- US-A- 5 275 887
- US-A- 5 356 681
- US-A1- 2003 207 118
- DATABASE WPI Section Ch, Week 198932 Derwent Publications Ltd., London, GB; Class A88, AN 1989-229889 XP002326373 & JP 01 117149 A (CANON KK) 10 May 1989 (1989-05-10)

## Description

### INTRODUCTION

The present invention relates to fluoropolymer compositions and their adhesion to polymer and other substrates. The invention further relates to composite articles containing fluoropolymers bonded to the substrates.

Fluorine containing polymers possess a unique blend of advantageous physical properties. For example, the polymers are generally characterized by a high degree of stability and resistance to a wide variety of chemical fluids. These properties make the polymers valuable for use in applications in which a material is in contact with a fluid, such as in seals.

Fluorocarbon rubbers are elastomeric materials made of copolymers of fluorine containing monomers. The cured rubbers have, in addition to the stability and fluid resistance of fluorine containing polymers in general, the elastomeric properties typical of rubber materials. Fluorocarbon rubbers find wide use in the area of seals and gaskets.

In some applications, the fluorocarbon rubbers may be molded into articles that are useful directly as seals, such as O-rings and gaskets. In other applications, it is desirable to provide composite articles containing both the fluorocarbon rubber component and a substrate. The substrate provides physical strength and allows incorporation of the fluorocarbon elastomer into a wider variety of configurations for use in seals and other applications.

However, the bonding of fluorocarbon rubber material to metal and other substrates such as plastics, ceramics, and other elastomers is difficult to achieve because of the low surface energy state of materials with fluorinated molecular structure. Bonding may be enhanced by providing a mechanical interlock structure to the fluorocarbon polymer and to the substrate. Bonding of fluorocarbon elastomers may also be achieved by the reaction of coupling molecules in an adhesion layer during the curing process. Such can generate or trigger chemical reactions between the fluorinated elastomers and coupling agent molecules.

Dynamic vulcanizates of fluorocarbon elastomers consist of a discrete phase cured fluorocarbon elastomer particles in a continuous phase of a thermoplastic material such as a fluoroplastic. The fully cured nature of the fluoroelastomer particles means that the dynamic vulcanizates cannot trigger the chemical reaction between elastomer molecules and coupling agent molecules used in traditional fluoroelastomer adhesives. In addition, because the continuous matrix is made of a thermoplastic such as a fluoroplastic, the cured elastomer particles are not in close contact with the surface of a substrate to which they must be bonded.

Document EP 0 875 522 A1 relates to a method of producing a firm bond between a rigid subcomponent which comprises a polyamide containing thermoplastic composition and a flexible subcomponent comprising a vulcanized fluoroelastomer. Produced composite articles comprise at least two subcomponents which are firmly joined to one another which comprise i) a vulcanizate and ii) a polyamide containing thermoplastic wherein a) said *polyamide containing thermoplastic comprises at least 30% by weight* of polyamide and in said polyamide at least 30% of the end groups are amino end groups and b) said vulcanizate is produced by vulcanization of a fluororubber compound while in contact with said polyamide containing thermoplastic. The method is a two-stage process, the stiff molding is first produced by injection molding, extrusion or consolidation of prepregs and, in a second step, the possibly reshaped rubber compound is applied and the molding is exposed to the vulcanization conditions for the rubber.

Document WO 01/98405 A2 relates to a process for producing a fluorine containing thermoplastic vulcanizate composition itself. This composition comprises melt blending thermoplastic fluorocarbon resin and non-vulcanized amorphous fluorine containing elastomer, followed by dynamically vulcanizing this blend to form chemically cross-linked elastomer particles dispersed in the thermoplastic fluorocarbon resin. In detail, document WO 01/98405 A2 describes the production of a two phase composition comprising a continuous phase thermoplastic material and a disperse phase elastomer, produced dynamically vulcanizing the elastomer while the discrete phase elastomer is dispersed in the continuous phase thermoplastic material.

It would be desirable to provide methods for enhancing the adhesion of dynamic vulcanizates of fluorocarbon elastomers to metal and other substrates. In addition, it would be desirable to provide methods for preparing composite articles wherein a fluoroelastomer dynamic vulcanizate is adhered to a substrate.

### SUMMARY

The present invention provides a method for enhancing the adhesion of a thermoplastic fluoroelastomer composition to a substrate, and for making composite articles in accordance with claim 1. In various embodiments, such methods comprise applying a partially cured dynamic vulcanizate of a fluoroelastomer and a thermoplastic material onto a silane adhesive coated substrate, and curing the partially cured dynamic vulcanizate while it is in contact with the silane adhesive coated substrate. The partially cured material is applied by bringing it into contact with the substrate by a variety of methods such as casting, insertion molding, and coextrusion.

The partially cured dynamic vulcanizate is preferably made by dynamically vulcanizing a fluoroelastomer in the presence of a thermoplastic and a curing agent under conditions of time and temperature such that the fluoroelastomer is less than completely cured. The cure is completed when the dynamic vulcanizate is in contact with the silane adhesive coated substrate. In various embodiments, the substrate comprises a silane adhesive layer in contact with a solid support. In one such embodiment, the partially cured thermoplastic fluoroelastomer composition is brought into contact with the silane adhesive layer.

### DESCRIPTION

The following definitions and non-limiting guidelines must be considered in reviewing the description of this invention set forth herein.

The headings (such as "Introduction" and "Summary,") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations of the stated features. Specific Examples are provided for illustrative purposes of how to make, use and practice the compositions and methods of this invention and, unless explicitly stated otherwise, are not intended to be a representation that given embodiments of this invention have, or have not, been made or tested.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word "include," and its variants, is intended to be non-limiting, such that recitation of items in a list is not to the exclusion of other like items that may also be useful in the materials, compositions, devices, and methods of this invention.

In one aspect, the present invention provides a method of adhering a thermoplastic fluoroelastomer composition to a solid substrate. Such methods include methods of adhering a thermoplastic elastomeric composition to a solid substrate, comprising:
(a) dynamically vulcanizing a fluoroelastomer in the presence of a thermoplastic material and curing agent for a time less than that needed to completely cure the fluoroelastomer, to form a partially cured thermoplastic vulcanizate
(b) applying a silane adhesive layer to said substrate
(c) bringing said partially cured thermoplastic vulcanizate into contact with said silane adhesive layer; and
(d) completing the curing of said thermoplastic vulcanizate.

A fluoroelastomer is dynamically vulcanized in the presence of a fluorine-containing thermoplastic material and a curing agent for a time less than needed to completely cure the fluoroelastomer at the temperature used. In this way a partially cured thermoplastic dynamic vulcanizate is formed. In a separate step, a silane adhesive layer is applied to a substrate such as metal, plastics, ceramics, or another elastomer. The partially cured thermoplastic vulcanizate is brought into contact with the adhesive layer, and the curing of the thermoplastic vulcanizate is completed while it is in contact with the silane adhesive layer.

The vulcanizate is brought into contact with the adhesive layer by a variety of methods, such as insertion molding and coextruding. In various embodiments, the bringing process element (c) comprises insertion molding said partially cured thermoplastic vulcanizate onto said silane adhesive covered substrate. (As referred to herein, a "process element" refers to a step or other activity performed in the process. Such elements may be performed sequentially or simultaneously, unless otherwise specified or required by the context of the process element.) In various embodiments, a silane adhesive layer is coextruded between the partially cured thermoplastic vulcanizate and the substrate. In one embodiment, the silane adhesive layer is applied during coextrusion with a liquid continuous injection unit.

The fluorocarbon elastomers include copolymers of one or more fluorine containing monomers, such as vinylidene fluoride, hexafluoropropylene, tetrafluoroethylene, and perfluorovinyl ethers. The fluorocarbon elastomers may additionally contain cure site monomers. Conventional curing agents for fluorocarbon elastomers may be used, such as bisphenol curing agents and peroxide curing agents.

In accordance with claim 1, a method of making a composite article is provided. The composite article is comprises a solid substrate onto which a cured fluoroelastomer composition is adhered. Such methods include those for making a composite article comprising:
(a) applying a partially cured thermoplastic elastomer composition onto a silane adhesive coated substrate, wherein said thermoplastic elastomer composition comprises a discrete phase of a partially cured fluoroelastomer and a continuous phase of a thermoplastic polymeric material; and
(b) curing said partially cured thermoplastic elastomer composition.

In a preferred embodiment, a partially cured dynamic vulcanizate of a fluoroelastomer and a thermoplastic material is applied onto a silane adhesive coated substrate, and the partially cured vulcanizate has its cure completed while it is in contact with the silane adhesive coated substrate. The partially cured dynamic vulcanizate preferably comprises a discrete phase of partially cured fluoroelastomer particles and a continuous phase of a thermoplastic polymeric material. The partially cured dynamic vulcanizate is made by mixing together the fluoroelastomer, the thermoplastic material, and a curing agent while heating to effect partial cure of the fluoroelastomer in the presence of the thermoplastic. The thermoplastic may be a fluoroplastic material or a non-fluorine containing thermoplastic polymer. The fluoroelastomer optionally comprise cure site monomers, and curing agents such as bisphenols or peroxides. In various embodiments wherein the substrate comprises a silane adhesive layer, the silane adhesive layer is applied on a solid support and the partially cured dynamic vulcanizate above is applied onto the silane adhesive layer. The partially cured material is applied to the substrate by a variety of methods including insertion molding and coextrusion.

In a coextrusion method, a partially cured dynamic vulcanizate is made that comprises a partially cured fluoroelastomer discrete phase and a continuous phase containing a thermoplastic polymeric material. The partially cured dynamic vulcanizate and the silane adhesive coated substrate are coextruded to provide contact. Further curing of the partially cured dynamic vulcanizate is carried out after coextrusion while the silane layers is in contact. Optionally, the silane adhesive layer is coextruded between the dynamic vulcanizate and the substrate.

In various embodiments, the partially cured dynamic vulcanizate is made by a process that comprises mixing together a fluoroelastomer resin, a thermoplastic polymeric material, and a curing agent that is capable of reacting with the fluoroelastomer resin. The mixture is heated during mixing to cause reaction of the fluoroelastomer resin and the curing agent. The reaction is carried out for a time less than that needed to fully cure the resin. For example, the mixing together of the thermoelastomer and the thermoplastic material is generally carried out for a time corresponding to T90 or less, where T90 is determined as the time, dependent on the reaction temperature, where the viscosity of the reaction mixture increases by 90% of the value it will attain in the fully cured rubber.

In various methods involving insertion molding, a silane adhesive layer is applied onto a substrate and then the silane adhesive covered substrate is placed into a mold. Then, a partially cured elastomer composition such as the dynamic vulcanizate described above is insertion molded into the mold to contact the substrate. The elastomeric composition is then held in contact with the substrate for a further time until cure of the elastomer is complete.

Dynamic vulcanization, or mixing of the fluoroelastomer and thermoplastic, is performed by batch, continuous, or semi-batch techniques. In one method, a mixture of an uncured fluorocarbon elastomer and a thermoplastic material may be fed into the barrel of a twin screw extruder. The fed mixture is blended and heated in the barrel of the twin screw extruder until it reaches a downstream port used for feeding a curing agent into the mixture. The curing agent, fluorocarbon elastomer, and thermoplastic material are further mixed in the barrel of the extruder for a time less than that needed to fully cure the fluoroelastomer, for example for a time T90 or less. Before the fluoroelastomer is completely cured, the partially cured thermoplastic vulcanizate is extruded from the barrel. Thereafter the vulcanizate is applied onto a substrate. Upon cure of the vulcanizate is completed while in contact with the silane adhesive coated substrate.

In various embodiments, the partially cured thermoplastic vulcanizate is fed directly to a coextrusion die, or immediately insertion molded into a mold containing a substrate such as discussed above. Alternatively, the extruded vulcanizate is cooled and held for later use.

Processable rubber compositions are provided comprising a vulcanized elastomeric material dispersed in a matrix. The vulcanized elastomeric material is the product of vulcanizing, crosslinking, or curing a fluorocarbon elastomer. The matrix is made of a thermoplastic material. The processable rubber compositions are processed by a variety of methods, including conventional thermoplastic techniques, to form composite articles having the rubber composition adhered to a solid substrate. The rubber compositions of the composite articles have physical properties that make them useful in a number of applications calling for elastomeric properties. In particular preferred embodiments, the rubber compositions exhibit a Shore A hardness of about 50 or more, Shore A 70 or more, or in the range of from about Shore A 70 to about Shore A 90. In addition or alternatively, the tensile strength is preferably about 4 MPa or greater, about 8 MPa or greater, or from about 8 to about 13 MPa. In still other embodiments, the cured rubbers are characterized as having a modulus at 100% of at least 2MPa, or at least about 4 MPa, or in the range of from about 4 to about 8 MPa. In other embodiments, elongation at break of articles made from the processable compositions of the invention will be 10% or greater, preferably at least about 50%, or at least about 150%, or from about 150 to about 300 %. Shaped articles of the invention are preferably characterized as having at least one of hardness, tensile strength, modulus, and elongation at break in the above noted ranges.

In one aspect, the rubber compositions are made of two-phases where the matrix forms a continuous phase, and the vulcanized elastomeric material is in the form of particles forming a non-continuous, dispersed, or discrete phase.

In preferred embodiments, the compositions contain about 35% by weight or more, or about 40% by weight or more of the elastomer phase, based on the total weight of elastomer and thermoplastic material. In other embodiments, the compositions contain about 50% by weight or more of the elastomer phase. The compositions are homogenous blends of two phases that are sufficiently compatible that the compositions may readily be formed into shaped articles having sufficient elastomer properties, such as tensile strength, modulus, elongation at break, and compression set to be industrially useful in applications requiring elastomeric properties, such as seals, hoses, and the like.

The elastomer phase may be present in the form of particles in a continuous thermoplastic phase. The particles of the elastomer phase preferably have minimum dimensions of about 10 im or less, or about 1 im or less.

In various embodiments, the rubber composition of the invention is made by dynamic vulcanization of a fluorocarbon elastomer in the presence of a thermoplastic component. In such embodiments, a method is provided for making the rubber composition, comprising combining a curative agent, an elastomeric material, and a thermoplastic material to form a mixture. The mixture is heated at a temperature and for a time sufficient to cause partial vulcanization or cure of the fluorocarbon elastomer in the presence of the thermoplastic material, but is carried out for a time less than that required for complete cure. Mechanical energy is applied to the mixture of elastomeric material, curative agent and thermoplastic material during the heating step. Thus the method of the invention provides for mixing the elastomer and thermoplastic components in the presence of a curative agent and heating during the mixing to effect a partial cure of the elastomeric component. Alternatively, the elastomeric material and thermoplastic material are mixed for a time and at a shear rate sufficient to form a dispersion of the elastomeric material in a continuous thermoplastic phase. Thereafter, a curative agent is added to the dispersion of elastomeric material and thermoplastic material while continuing the mixing. Finally, the dispersion is heated while continuing to mix to produce the processable rubber composition of the invention.

In a preferred embodiment, composite articles prepared from the compositions of the invention exhibit an advantageous set of physical properties that includes a high degree of resistance to the effects of chemical solvents. In preferred embodiments, articles are made for which the hardness, tensile strength, and/or the elongation at break change very little or change significantly less than comparable cured fluorocarbon elastomers or other known thermoplastic vulcanizates, when the articles are exposed for extended periods of time such as by immersion or partial immersion in organic solvents or fuels.

Preferred fluorocarbon elastomers include commercially available copolymers of one or more fluorine containing monomers, such as vinylidene fluoride (VDF), hexafluoropropylene (HFP), tetrafluoroethylene (TFE), and perfluorovinyl ethers (PFVE). Preferred PFVE include those with a C₁₋₈ perfluoroalkyl group, preferably perfluoroalkyl groups with from 1 to 6 carbons, and particularly perfluoromethyl vinyl ether and perfluoropropyl vinyl ether. In addition, the copolymers optionally comprise repeating units derived from olefins such as ethylene (Et) and propylene (Pr). The copolymers may also contain relatively minor amounts of cure site monomers (CSM), discussed further below. Preferred copolymer fluorocarbon elastomers include VDF/HFP, VDF/HFP/CSM, VDF/HFP/TFE, VDF/HFP/TFE/CSM, VDF/PFVE/TFE/CSM, TFE/Pr, TFE/Pr/VDF, TFE/Et/PFVENDF/CSM, TFE/Et/PFVE/CSM and TFE/PFVE/CSM. The elastomer designation gives the monomers from which the elastomer gums are synthesized. The elastomer gums preferably have viscosities that give a Mooney viscosity in the range generally of from about 15 to about 160 (ML1 + 10, large rotor at about 121°C), which can be selected for a combination of flow and physical properties. Elastomer suppliers include Dyneon (3M), Asahi Glass Fluoropolymers, Solvay/Ausimont, Dupont, and Daikin.

In one embodiment, the elastomeric material is described as a copolymer of tetrafluoroethylene and at least one C_{2 - 4} olefin. As such, the elastomeric material comprises repeating units derived from tetrafluoroethylene and at least one C_{2 - 4} olefin. Optionally, the elastomeric material may contain repeating units derived from one or more additional fluorine-containing monomers.

A preferred additional monomer in the vulcanized elastomeric material is vinylidene difluoride. Other fluorine-containing monomers that are optionally used in the elastomeric materials include perfluoroalkyl vinyl compounds, perfluoroalkyl vinylidene compounds, and perfluoroalkoxy vinyl compounds. Hexafluoropropylene (HFP) is an example of perfluoroalkyl vinyl monomer. Perfluoromethyl vinyl ether is an example of a preferred perfluoroalkoxy vinyl monomer. For example, rubbers based on copolymers of tetrafluoroethylene, ethylene, and perfluoromethyl vinyl ether are commercially available from Dupont under the Viton® ETP trade name.

In another embodiment, the elastomeric materials are curable fluorocarbon elastomers containing repeating units derived from fluoromonomers vinylidene fluoride (VDF) and hexafluoropropylene (HFP). In some embodiments, the elastomers further contain repeating units derived from tetrafluoroethylene.

Chemically, in this embodiment the elastomeric material is made of copolymers of VDF and HFP, or of terpolymers of VDF, HFP, and tetrafluoroethylene (TFE), with optional cure site monomers. In preferred embodiments, they contain about 66 to about 70% by weight fluorine. The elastomers are commercially available, and are exemplified by the Viton® A, Viton® B, and Viton® F series of elastomers from DuPont Dow Elastomers. Grades are commercially available containing the gum polymers alone, or as curative-containing pre-compounds.

In another embodiment, the elastomers are described chemically as copolymers of TFE and PFVE, optionally as a terpolymer with VDF. The elastomer may further contain repeating units derived from cure site monomers.

In various embodiments, fluorocarbon elastomeric materials used to make the processable rubber compositions of the invention are prepared by free radical emulsion polymerization of a monomer mixture containing the desired molar ratios of starting monomers. Initiators include organic or inorganic peroxide compounds, and suitable emulsifying agent include fluorinated acid soaps. In one embodiment, the molecular weight of the polymer formed is controlled by the relative amounts of initiators used compared to the monomer level and the choice of transfer agent if any. Suitable transfer agents include carbon tetrachloride, methanol, and acetone. The emulsion polymerization is conducted under batch or continuous conditions. Such fluoroelastomers are commercially available as noted above.

The fluorocarbon elastomers may also contain up to about 5 mole % and preferably up to about 3 mole % of repeating units derived from so-called cure site monomers that provide cure sites for vulcanization as discussed below. In one embodiment, the cure site repeating units are derived from bromine-containing olefin monomers and/or from iodine containing monomers. If used, preferably the repeating units of an iodine- or bromine-containing monomer are present in a level to provide at least about 0.05% bromine or iodine in the polymer, preferably 0.3% or more. In a preferred embodiment, the total weight of bromine or iodine in the polymer is about 1.5 wt. % or less.

Bromine-containing olefin monomers useful to provide cure sites for fluoropolymers are disclosed for example in U.S. Patent 4,035,565. Non-limiting examples of bromine-containing monomers include bromotrifluoroethylene and 4-bromo-3,3,4,4-tetrafluoro-1-butene. Additional non-limiting examples include vinyl bromide, 1-bromo-2,2-difluoroethylene, perfluoroalkyl bromide, 4-bromo-1,1,2-trifluorobutene, 4-bromo-1,1,3,3,4,4-hexafluorobutene, 4-bromo-3-chloro-1,1,3,4,4,-pentafluorobutene, 6-bromo-5,5,6,6-tetrafluorohexene, 4-bromoperfluorobutene-1, and 3,3-difluoroallyl bromide. As noted above, it is usually preferred that enough of the bromo-olefin repeating units be present to provide from about 0.3-1.5 wt. % bromine in the copolymer.

Other cure monomers may be used that introduce low levels, preferably less than or equal about 5 mole %, more preferably less than or equal about 3 mole %, of functional groups such as epoxy, carboxylic acid, carboxylic acid halide, carboxylic ester, carboxylate salts, sulfonic acid groups, sulfonic acid alkyl esters, and sulfonic acid salts. such monomers and cure are described for example in Kamiya et al., U.S. Patent 5, 354, 811.

The thermoplastic making up the matrix is a polymeric material that softens and flows upon heating. In one aspect, a thermoplastic material is one the melt viscosity of which can be measured, such as by ASTM D-1238 or D-2116, at a temperature above its melting point

The thermoplastic material of the invention may be selected to provide enhanced properties of the rubber/thermoplastic combination at elevated temperatures, preferably above about 100°C and more preferably at about 150°C and higher. Such thermoplastics include those that maintain physical properties, such as at least one of tensile strength, modulus, and elongation at break to an acceptable degree at the elevated temperature. In a preferred embodiment, the thermoplastics possess physical properties at the elevated temperatures that are superior (i.e. higher tensile strength, higher modulus, and/or higher elongation at break) to those of the cured fluorocarbon elastomer (rubber) at a comparable temperature.

In various embodiments, the thermoplastic polymeric material is a thermoplastic elastomer. Thermoplastic elastomers have some physical properties of rubber, such as softness, flexibility and resilience, but may be processed like thermoplastics. A transition from a melt to a solid rubber-like composition occurs fairly rapidly upon cooling. This is in contrast to conventional elastomers, which harden slowly upon heating. In various embodiments, thermoplastic elastomers are processed on conventional plastic equipment such as injection molders and extruders. Scrap is preferably readily recycled.

Thermoplastic elastomers have a multi-phase structure, wherein the phases are generally intimately mixed. In many cases, the phases are held together by graft or block copolymerization. At least one phase is made of a material that is hard at room temperature but fluid upon heating. Another phase is a softer material that is rubber like at room temperature.

Many thermoplastic elastomers among those useful herein are known. Non-limiting examples of A-B-A type thermoplastic elastomers include polystyrene/polysiloxane/polystyrene, polystyrene/polyethylene-co-butylene/polystyrene, polystyrene/polybutadiene polystyrene, polystyrene/polyisoprene/polystyrene, poly-á-methyl styrene/polybutadiene/poly-á-methyl styrene, poly-á-methyl styrene/polyisoprene/ poly-á-methyl styrene, and polyethylene/polyethylene-co-butylene/polyethylene.

Non-limiting examples of thermoplastic elastomers having a (A-B)ₙ repeating structure include polyamide/polyether, polysulfone/polydimethylsiloxane, polyurethane/polyester, polyurethane/polyether, polyester/polyether, polycarbonate/ polydimethylsiloxane, and polycarbonate/polyether.

In one embodiment, thermoplastic elastomers have alternating blocks of polyamide and polyether. Such materials include those that are commercially available, for example from Atofina under the Pebax® trade name. The polyamide blocks may be derived from a copolymer of a diacid component and a diamine component, or may be prepared by homopolymerization of a cyclic lactam. The polyether block is generally derived from homo- or copolymers of cyclic ethers such as ethylene oxide, propylene oxide, and tetrahydrofuran.

In one embodiment, the thermoplastic polymeric material is selected from among solid, generally high molecular weight, plastic materials. Preferably, the materials are crystalline or semi-crystalline polymers, and more preferably have a crystallinity of at least about 25 % as measured by differential scanning calorimetry. Amorphous polymers with a suitably high glass transition temperature are also acceptable as the thermoplastic polymeric material. The thermoplastic also preferably has a melt temperature or glass transition temperature in the range from about 80°C to about 350°C, but the melt temperature should generally be lower than the decomposition temperature of the thermoplastic vulcanizate.

Non-limiting examples of thermoplastic polymers include polyolefins, polyesters, nylons, polycarbonates, styrene-acrylonitrile copolymers, polyethylene terephthalate, polybutylene terephthalate, polyamides, polystyrene, polystyrene derivatives, polyphenylene oxide, polyoxymethylene, and fluorine-containing thermoplastics.

Polyolefins are formed by polymerizing α-olefins such as, but not limited to, ethylene, propylene, 1-butene, 1-hexene, 1-octene, 2-methyl-1-propene, 3-methyl-1-pentene, 4-methyl-1-pentene, 5-methyl-1-hexene, and mixtures thereof. Copolymers of ethylene and propylene or ethylene or propylene with another α-olefin such as 1-butene, 1-hexene, 1-octene, 2-methyl-1-propene, 3-methyl-1-pentene, 4-methyl-1-pentene, 5-methyl-1-hexene or mixtures thereof are also contemplated. These homopolymers and copolymers, and blends of them, may be incorporated as the thermoplastic polymeric material of the invention.

Polyester thermoplastics contain repeating ester linking units in the polymer backbone. In one embodiment, they contain repeating units derived from low molecular weight diols and low molecular weight aromatic diacids. Non-limiting examples include the commercially available grades of polyethylene terephthalate and polybutylene terephthalate. Alternatively, the polyesters are based on aliphatic diols and aliphatic diacids. Exemplary are the copolymers of ethylene glycol or butanediol with adipic acid. In another embodiment, the thermoplastic polyesters are polylactones, prepared by polymerizing a monomer containing both hydroxyl and carboxyl functionality. Polycaprolactone is a non-limiting example of this class of thermoplastic polyester.

Polyamide thermoplastics contain repeating amide linkages in the polymer backbone. In one embodiment, the polyamides contain repeating units derived from diamine and diacid monomers such as the well known nylon 66, a polymer of hexamethylene diamine and adipic acid. Other nylons have structures resulting from varying the size of the diamine and diacid components. Non-limiting examples include nylon 610, nylon 612, nylon 46, and nylon 6/66 copolymer. In another embodiment, the polyamides have a structure resulting from polymerizing a monomer with both amine and carboxyl functionality. Non-limiting examples include nylon 6 (polycaprolactam), nylon 11, and nylon 12.

Other polyamides made from diamine and diacid components include the high temperature aromatic polyamides containing repeating units derived from diamines and aromatic diacids such as terephthalic acid. Commercially available examples of these include PA6T (a copolymer of hexanediamine and terephthalic acid), and PA9T (a copolymer of nonanediamine and terephthalic acid), sold by Kuraray under the Genestar tradename. For some applications, the melting point of some aromatic polyamides is higher than optimum for thermoplastic processing. In such cases, the melting point is lowered by preparing appropriate copolymers. In a non-limiting example, in the case of PA6T, which has a melting temperature of about 370°C, it is possible to in effect lower the melting point to below a moldable temperature of about 320°C by including an effective amount of a non-aromatic diacid such as adipic acid when making the polymer.

In another preferred embodiment, an aromatic polyamide is used based on a copolymer of an aromatic diacid such as terephthalic acid and a diamine containing greater than 6 carbon atoms, preferably containing 9 carbon atoms or more. The upper limit of the length of the carbon chain of the diamine is limited from a practical standpoint by the availability of suitable monomers for the polymer synthesis. Suitable diamines include those having from 7 to 20 carbon atoms, preferably in the range of 9 to 15 carbons, and more preferably in the range from 9 to 12 carbons. Preferred embodiments include C9, C10, and C11 diamine based aromatic polyamides. Preferably such aromatic polyamides exhibit an increase level of solvent resistance based on the oleophilic nature of the carbon chain having greater than 6 carbons. If desired to reduce the melting point below a preferred molding temperature (typically about 320°C or lower), the aromatic polyamide based on diamines of greater than 6 carbons may contain an effective amount of a non-aromatic diacid, as discussed above with the aromatic polyamide based on a 6 carbon diamine. Such effective amount of diacid should be enough to lower the melting point into a desired molding temperature range, without unacceptably affecting the desired solvent resistance properties.

Other non-limiting examples of high temperature thermoplastics include polyphenylene sulfide, liquid crystal polymers, and high temperature polyimides. Liquid crystal polymers are based chemically on linear polymers containing repeating linear aromatic rings. Because of the aromatic structure, the materials form domains in the nematic melt state with a characteristic spacing detectable by x-ray diffraction methods. Examples of materials include copolymers of hydroxybenzoic acid, or copolymers of ethylene glycol and linear aromatic diesters such as terephthalic acid or naphthalene dicarboxylic acid.

High temperature thermoplastic polyimides include the polymeric reaction products of aromatic dianhydrides and aromatic diamines. Such polyimides include those that are commercially available from a number of sources. Exemplary is a copolymer of 1,4-benzenediamine and 1,2,4,5-benzenetetracarboxylic acid dianhydride.

In a preferred embodiment, the matrix comprises at least one fluorine-containing thermoplastic. Suitable thermoplastic fluorine-containing polymers include those selected from a wide range of polymers and commercial products. The polymers are preferably melt processable, such that they soften and flow when heated, and can be readily processed in thermoplastic techniques such as injection molding, extrusion, compression molding, and blow molding. The materials are preferably readily recyclable by melting and re-processing.

In various embodiments, the thermoplastic polymers are fully fluorinated or partially fluorinated. Fully fluorinated thermoplastic polymers include copolymers of tetrafluoroethylene and perfluoroalkyl vinyl ethers. The perfluoroalkyl group is preferably of 1 to 6 carbon atoms. Other examples of copolymers are PFA (copolymer of TFE and perfluoropropyl vinyl ether) and MFA (copolymer of TFE and perfluoromethyl vinyl ether). Other examples of fully fluorinated thermoplastic polymers include copolymers of TFE with perfluoroolefins of 3 to 8 carbon atoms. Non-limiting examples include FEP (copolymer of TFE and hexafluoropropylene).

Partially fluorinated thermoplastic polymers include E-TFE (copolymer of ethylene and TFE), E-CTFE (copolymer of ethylene and chlorotrifluoroethylene), and PVDF (polyvinylidene fluoride). A number of thermoplastic copolymers of vinylidene fluoride are also suitable thermoplastic polymers for use in the invention. These include copolymers with perfluoroolefins such as hexafluoropropylene, and copolymers with chlorotrifluoroethylene. In various embodiments, thermoplastic terpolymers are used. These include thermoplastic terpolymers of TFE, HFP, and vinylidene fluoride, including fluorine-containing thermoplastic materials that are commercially available. Suppliers include Dyneon (3M), Daikin, Asahi Glass Fluoroplastics, Solvay/Ausimont and DuPont. In some commercial embodiments, partially fluorinated fluoroplastics have from about 59 to about 76% by weight fluorine.

Useful curative agents include diamines, peroxides, and polyol/onium salt combinations. Diamine curatives are relatively slow curing, but offer advantages in several areas. Such curatives are commercially available, for example as Diak-1 from DuPont Dow Elastomers.

Preferred peroxide curative agents include organic peroxides, preferably dialkyl peroxides. Preferably, an organic peroxide is selected to function as a curing agent for the composition in the presence of the other ingredients and under the temperatures to be used in the curing operation without causing any harmful amount of curing during mixing or other operations which are to precede the curing operation. A dialkyl peroxide which decomposes at a temperature above about 49°C is especially preferred when the composition is to be subjected to processing at elevated temperatures before it is cured. In many cases one will prefer to use a di-tertiarybutyl peroxide having a tertiary carbon atom attached to a peroxy oxygen. Non-limiting examples include 2,5-dimethyl-2,5-di(tert-butylperoxy)-3-hexyne; 2,5-dimethyl-2,5-di(tert-butylperoxy) hexane; and 1,3-bis-(t-butylperoxyisopropyl)benzene. Other non-limiting examples of peroxide curative agent include dicumyl peroxide, dibenzoyl peroxide, tertiary butyl perbenzoate, di[1,3-dimethyl-3-(t-butylperoxy)butyl]carbonate, and the like.

In various embodiments, one or more crosslinking coagents are combined with the peroxide. Examples include triallyl cyanurate; triallyl isocyanurate; tri(methallyl)-isocyanurate; tris(diallylamine)-s-triazine, triallyl phosphite; N,N-diallyl acrylamide; hexaallyl phosphoramide; N,N,N',N'-tetraallyl terephthalamide; N,N,N',N'-tetraallyl malonamide; trivinyl isocyanurate; 2,4,6-trivinyl methyltrisiloxane; and tri(5-norbornene-2-methylene) cyanurate.

Suitable onium salts are described, for example, in U.S. Pat. Nos. 4,233,421; 4,912,171; and 5,262,490. Examples include triphenylbenzyl phosphonium chloride, tributyl alkyl phosphonium chloride, tributyl benzyl ammonium chloride, tetrabutyl ammonium bromide, and triarylsulfonium chloride.

Another class of useful onium salts is represented by the following formula: 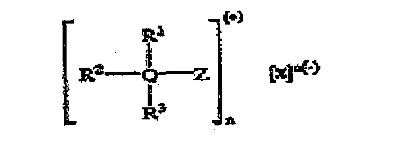 where
Q is nitrogen or phosphorus;
Z is a hydrogen atom or
is a substituted or unsubstituted, cyclic or acyclic alkyl group having from 4 to about 20 carbon atoms that is terminated with a group of the formula --COOA where A is a hydrogen atom or a NH₄⁺ cation or Z is a group of the formula - CY₂ COOR' where Y is a hydrogen or halogen atom, or is a substituted or unsubstituted alkyl or aryl group having from 1 to about 6 carbon atoms that may optionally contain one or more quaternary heteroatoms and where R' is a hydrogen atom, a NH₄⁺ cation, an alkyl group, or is an acyclic anhydride, e.g., a group of the formula -COR where R is an alkyl group or is a group that itself contains organo-onium (i.e., giving a bis-organo-onium); preferably R' is hydrogen; Z may also be a substituted or unsubstituted, cyclic or acyclic alkyl group having from 4 to about 20 carbon atoms that is terminated with a group of the formula -COOA where A is a hydrogen atom or is a NH₄⁺ cation;
R₁, R₂, and R₃ are each, independently, a hydrogen atom or an alkyl, aryl, alkenyl, or any combination thereof, each R₁, R₂, and R₃ can be substituted with chlorine, fluorine, bromine, cyano, -OR", or --COOR" where R" is a C₁ to C₂₀ alkyl, aryl, aralkyl, or alkenyl, and any pair of the R₁, R₂, and R₃ groups can be connected with each other and with Q to form a heterocyclic ring; one or more of the R₁, R₂, and R₃ groups may also be a group of the formula Z where Z is as defined above;
X is an organic or inorganic anion (for example, without limitation, halide, sulfate, acetate, phosphate, phosphonate, hydroxide, alkoxide, phenoxide, or bisphenoxide); and
n is a number equal to the valence of the anion X.

The polyol crosslinking agents may be any of those polyhydroxy compounds known in the art to function as a crosslinking agent or co-curative for fluoroelastomers, such as those polyhydroxy compounds disclosed in U.S. Pat. Nos. 4,259,463 (Moggi et al.), U.S. Pat. No. 3,876,654 (Pattison), U.S. Pat. No. 4,233,421 (Worm), and U.S. Defensive Publication T107,801 (Nersasian). Preferred polyols include aromatic polyhydroxy compounds, aliphatic polyhydroxy compounds, and phenol resins.

Representative aromatic polyhydroxy compounds include any one of the following: di-, tri-, and tetrahydroxybenzenes, -naphthalenes, and -anthracenes, and bisphenols of the following formula 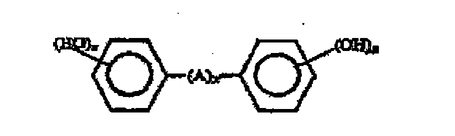 wherein A is a difunctional aliphatic, cycloaliphatic, or aromatic radical of 1 to 13 carbon atoms, or a thio, oxy, carbonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, or bromine atom, or carboxyl or an acyl radical (e.g., --COR, where R is H or a C₁ to C₈ alkyl, aryl or cycloalkyl group) or alkyl radical with, for example, 1 to 8 carbon atoms. It will be understood from the above bisphenol formula III that the --OH groups can be attached in any position (other than number one) in either ring. Blends of two or more such compounds can also be used. A preferred bisphenol compound is Bisphenol AF, which is 2,2-bis(4-hydroxyphenyl)hexafluoropropane. Other non-limiting examples include 4,4'-dihydroxydiphenyl sulfone (Bisphenol S) and 2,2-bis(4-hydroxyphenyl) propane (Bisphenol A). Aromatic polyhydroxy compound, such as hydroquinone may also be used as curative agents. Further non-limiting examples include catechol, resorcinol, 2-methyl resorcinol, 5-methyl resorcinol, 2-methyl hydroquinone, 2,5-dimethyl hydroquinone, and 2-t-butyl hydroquinone, 1,5-dihydroxynaphthalene and 9,10-dihydroxyanthracene.

Aliphatic polyhydroxy compounds may also be used as a polyol curative. Examples include fluoroaliphatic diols, e.g. 1,1,6,6-tetrahydrooctafluorohexanediol, and others such as those described in U.S. Pat. No. 4,358,559 (Holcomb et al.) and references cited therein. Derivatives of polyhydroxy compounds can also be used such as those described in U.S. Pat. No. 4,446,270 (Guenthner et al.) and include, for example, 2-(4-allyloxyphenyl)-2-(4-hydroxyphenyl)propane. Mixtures of two or more of the polyhydroxy compounds can be used.

Phenol resins capable of crosslinking a rubber polymer can be employed as the polyol curative agent. Reference to phenol resin may include mixtures of these resins. Such resins are disclosed in U.S. Pat. Nos. 2,972,600 and 3,287,440. These phenolic resins can be used to obtain the desired level of cure without the use of other curatives or curing agents.

Phenol resin curatives can be made by the condensation of alkyl substituted phenols or unsubstituted phenols with aldehydes, preferably formaldehydes, in an alkaline medium or by condensation of bi-functional phenoldialcohols. The alkyl substituents of the alkyl substituted phenols typically contain 1 to about 10 carbon atoms. Dimethylolphenols or phenolic resins, substituted in para-positions with alkyl groups containing 1 to about 10 carbon atoms, are preferred. Useful commercially available phenol resins include alkylphenol-formaldehyde resin, and bromomethylated alkylphenol-formaldehyde resins.

In one embodiment, phenol resin curative agents are represented by the general formula 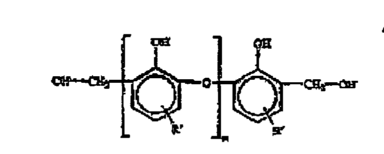 where Q is a divalent radical selected from the group consisting of -CH₂₋- and - CH₂-O- CH₂ --; m is zero or a positive integer from 1 to 20 and R' is hydrogen or an organic radical. Preferably, Q is the divalent radical - CH₂- O-CH₂-, m is zero or a positive integer from 1 to 10, and R' is hydrogen or an organic radical having less than 20 carbon atoms. In another embodiment, preferably m is zero or a positive integer from 1 to 5 and R' is an organic radical having between 4 and 12 carbon atoms. Other preferred phenol resins are also disclosed in U.S. Pat. No. 5,952,425.

In addition to the elastomeric material, the thermoplastic polymeric material, and curative, the processable rubber compositions of this invention optionally comprise other additives such as stabilizers processing aids, curing accelerators, fillers, pigments, adhesives, tackifiers, and waxes.

In various embodiments, a wide variety of processing aids are used, including plasticizers and mold release agents. Non-limiting examples of processing aids include Caranuba wax, phthalate ester plasticizers such as dioctylphthalate (DOP) and dibutylphthalate silicate (DBS), fatty acid salts such zinc stearate and sodium stearate, polyethylene wax, and keramide. In some embodiments, high temperature processing aids are preferred. Such include, without limitation, linear fatty alcohols such as blends of C₁₀-C₂₈ alcohols, organosilicones, and functionalized perfluoropolyethers. In some embodiments, the compositions contain about 1 to about 15% by weight processing aids, preferably about 5 to about 10% by weight.

In various embodiments, acid acceptor compounds are used as curing accelerators or curing stabilizers. Preferred acid acceptor compounds include oxides and hydroxides of divalent metals. Non-limiting examples include Ca(OH)₂, MgO, CaO, and ZnO.

Non-limiting examples of fillers include both organic and inorganic fillers such as, barium sulfate, zinc sulfide, carbon black, silica, titanium dioxide, clay, talc, fiber glass, fumed silica and discontinuous fibers such as mineral fibers, wood cellulose fibers, carbon fiber, boron fiber, and aramid fiber (Kevlar). Some non-limiting examples of processing additives include stearic acid and lauric acid. The addition of carbon black, extender oil, or both, preferably prior to dynamic vulcanization, is particularly preferred. Non-limiting examples of carbon black fillers include SAF black, HAF black, SRP black and Austin black. Carbon black improves the tensile strength, and an extender oil can improve processability, the resistance to oil swell, heat stability, hysteresis, cost, and permanent set. In a preferred embodiment, fillers such as carboxy block make up to about 40% by weight of the total weight of the compositions of the invention. Preferably, the compositions comprise from about 1 to about 40 weight % of filler. In other embodiments, the filler makes up from about 10 to about 25 weight % of the compositions.

The vulcanized elastomeric material, also referred to herein generically as a "rubber", is preferably present as small particles within a continuous thermoplastic polymer matrix. Preferably, the elastomeric material is fully crosslinked/cured in the final composition.

Partial cure can be achieved by adding an appropriate curative or curative system to a blend of thermoplastic material and elastomeric material, and vulcanizing or curing the rubber to the desired degree under vulcanizing conditions. The elastomer is crosslinked in a process of dynamic vulcanization. The term dynamic vulcanization refers to a vulcanization or curing process for a rubber (here a fluorocarbon elastomer) contained in a thermoplastic composition, wherein the curable rubber is vulcanized under conditions of sufficiently high shear at a temperature above the melting point of the thermoplastic component. The rubber is thus simultaneously crosslinked and dispersed within the thermoplastic matrix. Dynamic vulcanization is effected by applying mechanical energy to mix the elastomeric and thermoplastic components at elevated temperature in the presence of a curative in conventional mixing equipment such as roll mills, Moriyama mixers, Banbury mixers, Brabender mixers, continuous mixers, mixing extruders such as single and twin-screw extruders, and the like. An advantageous characteristic of dynamically cured compositions is that, even after they are fully cured, the compositions can be processed and reprocessed by conventional plastic processing techniques such as extrusion, injection molding and compression molding. Scrap or flashing is preferably salvaged and reprocessed.

Heating and mixing or mastication at vulcanization temperatures are preferably adequate to complete the vulcanization reaction in a few minutes or less, but if shorter vulcanization times are desired, higher temperatures and/or higher shear may be used. A suitable range of vulcanization temperature is from about the melting temperature of the thermoplastic material (typically about 120°C) to about 300°C or more. Typically, the range is from about 150°C to about 250°C A preferred range of vulcanization temperatures is from about 180°C to about 220°C. It is preferred that mixing continue without interruption until vulcanization occurs or is complete.

The processable rubber compositions of the invention may be manufactured in a batch process or a continuous process. In a batch process, predetermined charges of elastomeric material, thermoplastic material and curative agents are added to a mixing apparatus. In a typical batch procedure, the elastomeric material and thermoplastic material are first mixed, blended, masticated or otherwise physically combined until a desired particle size of elastomeric material is provided in a continuous phase of thermoplastic material. When the structure of the elastomeric material is as desired, a curative agent may be added while continuing to apply mechanical energy to mix the elastomeric material and thermoplastic material. Partial curing is effected by heating or continuing to heat the mixing combination of thermoplastic and elastomeric material in the presence of the curative agent for a time less than that required to completely cure the elastomer.

It is preferred to mix the elastomeric material and thermoplastic material at a temperature where the thermoplastic material softens and flows. If such a temperature is below that at which the curative agent is activated, the curative agent may be a part of the mixture during the initial particle dispersion step of the batch process. In some embodiments, a curative is combined with the elastomeric and polymeric material at a temperature below the curing temperature. When the desired dispersion is achieved, the temperature may be increased to effect cure. In one embodiment, commercially available elastomeric materials are used that contain a curative pre-formulated into the elastomer. However, if the curative agent is activated at the temperature of initial mixing, it is preferred to leave out the curative until the desired particle size distribution of the elastomeric material in the thermoplastic matrix is achieved. In another embodiment, curative is added after the elastomeric and thermoplastic materials are mixed. In a preferred embodiment, the curative agent is added to a mixture of elastomeric particles in thermoplastic material while the entire mixture continues to be mechanically stirred, agitated or otherwise mixed.

Continuous processes may also be used. In one embodiment, a twin screw extruder apparatus, either co-rotation or counter-rotation screw type, is provided with ports for material addition and reaction chambers made up of modular components of the twin screw apparatus. One such method for adhering a thermoplastic fluorocarbon elastomer composition onto a silane adhesive coated substrate using a twin screw extruder having a first port and a second downstream port, said method comprises
(a) feeding a mixture of unmixed fluorocarbon elastomer and thermoplastic material said first port of said extruder, wherein the uncured elastomer is characterized by a time T90, where T90 is determined as the time, dependent on the reaction temperature, where the viscosity of the reaction mixture increases by 90% of the value it will attain in the fully cured rubber;
(b) feeding a curing agent for the fluorocarbon elastomer into said second port said first port;
(c) mixing said curing agent, fluorocarbon elastomer, and thermoplastic material in said the extruder for a time of T90 or less to make a partially cured thermoplastic vulcanizate of the fluorocarbon elastomer;
(d) extruding said partially cured thermoplastic vulcanizate from said extruder;
(e) applying said thermoplastic vulcanizate onto a silane adhesive coated substrate, and
(f) completing the cure of the thermoplastic vulcanizate on the silane adhesive coated substrate.

In one embodiment, thermoplastic material and elastomeric material (as an uncured resin or gum) are combined by inserting them into the screw extruder together from a first hopper using a feeder (loss-in-weight or volumetric feeder). Temperature and screw parameters are preferably adjusted to provide a proper temperature and shear to effect the desired mixing and particle size distribution of an uncured elastomeric component in a thermoplastic material matrix. The duration of mixing is controlled by providing a longer or shorter length of extrusion apparatus or by controlling the speed of screw rotation for the mixture of elastomeric material and thermoplastic material to go through during the mixing phase. The degree of mixing may also be controlled by the mixing screw element configuration in the screw shaft, such as intensive, medium or mild screw designs. Then, at a downstream port, by using a side feeder (loss-in-weight or volumetric feeder), the curative agent may be added continuously to the mixture of thermoplastic material and elastomeric material as it continues to travel down the twin screw extrusion pathway. Downstream of the curative additive port, the mixing parameters and transit time may be varied as described above. By adjusting the shear rate, temperature, duration of mixing, mixing screw element configuration, as well as the time of adding the curative agent, the partially cured dynamic vulcanizates of the invention may be made in a continuous process. As in the batch process, the elastomeric material may be commercially formulated to contain a curative agent, generally a phenol or phenol resin curative.

The compositions and articles of the invention will contain a sufficient amount of vulcanized elastomeric material ("rubber") to form a rubbery composition of matter, that is, they will exhibit a desirable combination of flexibility, softness, and compression set. Preferably, the compositions should comprise at least about 25 parts by weight rubber, preferably at least about 35 parts by weight rubber, more preferably at least about 40 parts by weight rubber, even more preferably at least about 45 parts by weight rubber, and still more preferably at least about 50 parts by weight rubber per 100 parts by weight of the rubber and thermoplastic polymer combined. The amount of cured rubber within the thermoplastic vulcanizate is generally from about 5 to about 95 % by weight, preferably from about 35 to about 95% by weight, more preferably from about 40 to about 90%, and more preferably from about 50 to about 80% by weight of the total weight of the rubber and the thermoplastic polymer combined.

The amount of thermoplastic polymer within the processable rubber compositions of the invention is generally from about 5 to about 95% by weight, preferably from about 10 to about 65% by weight and more preferably from about 20 to about 50% by weight of the total weight of the rubber and the thermoplastic combined.

The processable rubber compositions in the composite articles of the invention include a cured rubber and a thermoplastic polymer. The composition is a homogeneous mixture wherein the rubber is in the form of finely-divided and well-dispersed rubber particles within a non-vulcanized matrix. In especially preferred embodiments, the rubber particles have an average particle size smaller than about 50 m, more preferably smaller than about 25 µm, even more preferably smaller than about 10 im or less, and still more preferably smaller than about 5 im.

The fully cured materials are preferably rubber-like to the extent that they will retract to less than 1.5 times their original length within one minute after being stretched at room temperature to twice its original length and held for one minute before release, as defined in ASTM D1566. Also, these materials satisfy the tensile set requirements set forth in ASTM D412, and they also satisfy the elastic requirements for compression set per ASTM D395.

Composite articles are made of rubber composition as described above adhered to a silane adhesive coated substrate. The silane adhesive layer is provided on the substrate prior to contact with the partially cured thermoplastic vulcanizate described above. The adhesive layer is made of an adhesive composition suitable for bonding the fluoroelastomer material to a substrate such as metal, plastic, or ceramic. The adhesive layer will contain coupling agents that tend to react with one or both surfaces to be joined and increase the bond strength. Such coupling agents generally have two chemical functionalities, one that interacts with the substrate surface and another that interacts with the fluoroelastomer component of the bonded interface.

The coupling agents may be represented with the structure "R-M-Y", where R is a group that reacts or interacts with the polymer and Y is a group that reacts or interacts with the metal, plastic, or ceramic or other material that makes up the substrate. In case where the substrate contains a metal, the Y group is usually in a form that is hydrolytically sensitive. The Y group will tend to leave under acidic or alkaline conditions yielding a more reactive hydroxy functionality. According to this invention the coupling agents are the commercially available silanes.

The silanes have the general structure R-Si-(OR')₃ where R is defined as above, and R' is generally methyl, ethyl, or lower alkyl. Suitable R group include vinyl, aminopropyl, methacryloxy, mercapto, and glycidoxy. Non-limiting examples of silane coupling agents for use in adhesive compositions are vinyltriethoxysilane and gamma-aminopropyl silane. Silane adhesives commercially available for bonding fluorocarbon elastomers to metal and other substrates are used, and their activity and effectiveness enhanced by carrying out the methods of the invention.

Uncured rubbers or elastomers are preferably provided in the form of resins or gums that have little or no elastomeric properties. The resins or gums are preferably cured or crosslinked in order to provide materials to having advantageous properties such as flexibility, softness, elasticity, compression set, and others. Such curing is carried out at selected temperatures for a time until the elastomeric physical properties are sufficiently developed. During cure, the physical properties change gradually from the non-elastomeric properties of the gum or resin to the elastomeric properties of the fully cured rubber. A convenient way to follow the progress of cure is to measure the viscosity of the material as function of time. Curing rubber systems are characterized by an increase in viscosity from the beginning of cure until completion.

In one aspect, bonding is enhanced between a fluorocarbon elastomer material and a solid substrate by applying a partially cured fluorocarbon elastomer composition to the substrate and completing the cure while the two are in contact. Experimentally, this can be carried out by dynamically curing the fluorocarbon elastomer composition for a time less than that needed to fully to develop its elastomeric properties. For example, the fluorocarbon elastomeric material can be cured for a time less than or equal to T90, where T90 is determined as the time, dependent on the reaction temperature, where the viscosity of the reaction mixture increases by 90% of the value it will attain in the fully cured rubber. In preferred embodiments, the fluorocarbon elastomer composition is cured for a time less than T90, such as for example T90 minus 30 seconds, or T90 minus 60 seconds. In such a partially cured state, the material can be extruded or insertion molded, but full elastomeric properties are not developed until further curing time.

Cure parameters such as T90 can be determined in separate experiments by curing the fluorocarbon elastomer component of the thermoplastic vulcanizate of the invention. The mean viscosity is followed in a RPA (Rubber Processing Analyzer). T90, Ts2, and other parameters may be routinely determined. For the fluorocarbon elastomer materials of the invention, T90 at typical temperatures ranges from less than a minute to a few minutes such as up to 2-5 minutes. Therefore, cure times to bring the fluorocarbon elastomer components to a partially cured state for application to the substrate are in generally fairly short. In many situations, that will mean it will be experimentally easier to carry out the partial cure and application to the substrate in a continuous or semi-continuous process described below.

Cure times T90 for systems cured with bisphenol, either no post cure or low post cure, are on the order of 2-5 minutes as discussed above. Systems that are cured by peroxide tend to have lower T90's. Typically, the T90 of a peroxide cured system can be less than one minute.

In general, the partially cured thermoplastic vulcanizates of the current invention can be made according to usual procedures of making dynamic vulcanizates of rubbers and thermoplastics. In particular, the methods are similar to those disclosed in co-pending application U.S. Serial No. 10/620,213, with the difference that the cure is carried out for a shorter period of time to achieve the synthesis of a partially cured thermoplastic vulcanizate. In a batch process, the elastomer, thermoplastic and curing agent are mixed together in a mixer and the partially cured material collected for later use. A continuous or semi-continuous process may be carried out in a twin-screw extruder, where the mixing time is determined by the speed of mixing and length of the barrel. Partially cured thermoplastic vulcanizates may be extruded from a twin-screw extruder through a strand die, cooled in a water bath, and chopped into pellets for later use. Alternatively, the partially cured thermoplastic vulcanizate may be extruded directly from the twin-screw extruder into a co-extrusion die or an insertion mold for application to a substrate.

After the partially cured thermoplastic vulcanizate is applied onto a silane adhesive coated substrate, cure of the elastomeric of the partially cured elastomeric composition is completed while the elastomer composition is in contact with the silane adhesive coated substrate. This may be accomplished by exposing the co-extruded or insertion molded substrate/elastomer composite article to further curing at elevated temperatures after application. In the case of insertion molding, the composite article may remain in the mold at an elevated temperature for a time sufficient to complete the cure. For the case of co-extruded articles such as sheets and hoses, the process may provide for passing the coextruded products through a heating oven for a time and at a temperature sufficient to complete the cure. It is believed that during completion of the cure while in contact with the substrate, the curing elastomer interacts with or triggers reactions with coupling agents in the adhesive layer. It is believed that this interaction leads to enhanced bonding.

The invention has been described above with respect to preferred embodiments. Further non-limiting examples are given in the examples below:

### Example 1

The curing time T90 of various fluorocarbon elastomers is measured by RPA (Rubber Processing Analyzer) For Dyneon® BRE 7231X, a terpolymer elastomer that is bisphenol curable, T90 is measured to be 124 seconds. For Tecnoflon® FOR 80HS, a no (low) post cure bisphenol curable terpolymer elastomer, T90 is measured to be 217 seconds. The T90 of Tecnoflon P457, a peroxide curable terpolymer elastomer, is measured at 26 seconds, while for Tecnoflon P757, T90 is measured to be 47 seconds. The Dyneon material is available form 3M, while the Tecnoflon materials are available from Solvay.

### Example 2 - Batch Procedure with Peroxide Curable Elastomer

The procedure to make partially FMK-TPV with peroxide curable FKM elastomer(s) is as follows:

Melt fluorocarbon elastomer(s) and plastic(s) in a batch mixer at elevated temperature (120∼200°C). The temperature is lower than that of bisphenol curable FKM based FKM-TPV is due to low degradation temperatures of peroxide curatives (usually 80∼200°C). Add fillers, curative package and processing aids into the batch mixture. Continue mixing until there is obtained a homogenously mixed and partially cured thermoplastic vulcanizate (TPV) (usually 1-3 minutes mixing time with 50 RPM rotor speed). The mixing time depends on T90 curing time, which is 30∼90 seconds at 180°C for typical peroxide curable elastomer(s). The curing time also depends on the kind of peroxide curatives (T_{1/2}). For example T_{1/2} of Trigonox 145 is 182°C, and T_{1/2} of Perkadox TML is 80°C. The mixing time can be extended by using lower temperature than T_{1/2}, due to the lower curing speed at the lower temperature.

Grind a chunk of the batch process TPV for injection molding or extrusion process. Prepare silane based adhesion coated metal housings for insert molding operations. A silane adhesive layer may be sprayed on, or the housing may be dipped or immersed in the silane adhesive. Insert an silane adhesive coated metal housing in the mold. Preheat the housing in the oven to 100-250°C. Injection molding machine is heated to melt the TPV at 120-200°C. TPV material is injected (2000-3000 psi injection pressure) onto the adhesive-coated metal housing and held together under pressure (800-1500 psi) for 5-180 seconds to allow adhesive layer and molten TPV material to contact together and react to promote a bonded layer.

The molded specimen is released from the mold and evaluated for bonding characteristics either right away or after a short post-heat treatment (for example one hour at 230°C in an oven).

After the pull test, the failed area is examined by SEM and EDAX to investigate failure mode by scanned image and elemental analysis with X-ray, respectively. For example, the scanned SEM image can be overlapped with the maps of each individual elements, such as, iron (Fe), silicon (Si), fluorine (F), phosphorous (P), etc.

### Example 3 - Batch Procedure with a Bisphenol Curable Fluorocarbon Elastomer

The procedure to make partially cured FMK-TPV with bisphenol curable FKM (both regular and no post cure) is as follows:

Melt fluorocarbon elastomer(s) and thermoplastic(s) in a batch mixer at an elevated temperature (for example 220∼250°C). Add fillers, curative package, and processing aids into the batch mixture. Continue mixing until there is obtained a homogenously mixed and partially cured thermoplastic vulcanizate (usually 1-3 minutes mixing time with 50 RPM rotor speed). The mixing time depends on the T90 curing time, which is 2-5 minutes for typical bisphenol curable elastomer(s). For example, T90 for typical FKM co- and terpolymer elastomer(s) is 2-3 minutes, and T90 for typical no post cure elastomer(s) is 3-4 minutes. Grind a chunk of the batch processed FKM-TPV for injection molding or extrusion process. Prepare silane based adhesive coated metal housing as in Example 2.

Insertion mold the TPV and housing as in Example 2. The molded specimens are released from the mold and tested for bonding behavior, either right away or after a short post-heat treatment (usually 22 hours at 230°C in an oven). For no post cure additive, approximately 1 hour of post heat treatment is used.

### Example 4 - Continuous Process

The partially cured thermoplastic vulcanizate may be made with a continuous process in a twin-screw extruder.

Grind fluorocarbon elastomer to the size of the thermoplastic particles. Mix the ground elastomers and thermoplastic pellets. Pour the mixture of ground elastomer and thermoplastic pellets into a hopper of a twin-screw extruder. Set up the screw barrel temperature above the melting point of the thermoplastic (for example about 200-280°C). Start feeding the elastomer and the thermoplastic mixture into the heated barrel. The elastomer and thermoplastic are melted, compressed, and mixed when the screws are rotated to push the mixture to the front side of the twin-screw extruder.

Add a mixture of curing agent, curing accelerator, processing aids, and carbon black through a side feeder at a downstream feeding station. The elastomer and thermoplastic mixture should be completely melted and mixed homogeneously before the addition of the powder mixture (for example 5-10 minutes total at 200 rpm and 240°C).

Mix the elastomer, thermoplastic, curative, curing accelerator, and other additives in the barrel of the twin-screw extruder downstream from the side feeder. The time of mixing is determined by the screw speed and the length of the barrel. The time of mixing should be T90 or less, where T90 is a curing parameter of the elastomer.

Discharge the partially cured thermoplastic vulcanizate through a strand die at the end of the twin-screw extruder barrel. The extrudate may be passed through a water bath for a cooling and cut into proper length to provide pellets for subsequent processing steps.

For bisphenol curable elastomers, it is typical to use about 2 minutes residence in the extruder barrel before addition of the curing agent. Typical screw speed is 200 rpm at about 240°C barrel temperature. The residence in the barrel after the remaining components are added through the downstream feeder is typically less than 30 seconds. The extrudate is preferably quenched or quickly cooled after ejection from the strand die by a chilled water bath.

For peroxide curable elastomers, the elastomer and thermoplastic are mixed in the extruder barrel prior to addition of the curing agent for about 2 minutes at a 200 rpm screw speed at a 150°C barrel temperature. These parameters are similar to those used with bisphenol curable elastomers, except that the barrel temperature is generally somewhat lower. Typically the residence time in the barrel after addition of the curative package is less than 30 seconds. The curative package may be added in powder form or in masterbatch form as pellets. Typical T90 cure times of peroxide curable elastomers are 30-90 seconds at 180°C. The T90 time may be lengthened by curing at a lower temperature. For example at a compounding temperature of 150°C, typical T90 curing times are from about 2-3 minutes. As before, the extrudate is preferably quenched or quickly cooled after extrusion from the strand die in a chilled water bath.

### Example 5 - Multilayer Co-extrusion Procedure

Connect multiple screw extruders, (for example 2-5 extruders; in some embodiments, 3 extruders are used) to a multilayer die. For an aqueous adhesive, the tie layer extruder can be replaced with a liquid continuous injection unit.

Heat up the barrel of the extruders for each of the layer materials. Typical temperatures for the extruder of the partially cured thermoplastic vulcanizate is 240°C, while a typical temperature for a nylon based thermoplastic elastomer substrate such as Pebax® 4033 would be 200°C.

Start the inner layer extruder and the outer layer extruder simultaneously, including an adhesive continuous injection unit. Quench the multilayer extruder strand as it exits from the co-extrusion die in a chilled water bath.

Typically, the size of the single screw extruders is about 1-2 inches in diameter, and the speed of the screw is 20-100 rpm. The size and speed of the screw depends on the thickness of each layer and the co-extrusion speed.

The co-extruded product may be in the form of a sheet, or in the form of a concentric extruded product such as a hose. After co-extrusion, the curing of the partially cured thermoplastic vulcanizate is completed at an elevated temperature. The co-extruded composite article comprises a fully cured fluorocarbon elastomer thermoplastic component bonded to an elastomer or a plastic substrate. When the composite article is concentrically co-extruded to form for example for a hose, a typical configuration is for the cured fluorocarbon elastomer composition to be an inner layer of the hose, while the elastomer or the thermoplastic material makes up the outer layer of the hose. For the sheet composite article are the concentric article, a tie layer may be provided between the fluorocarbon elastomer and the substrate. Non-limiting examples of elastomers that can be used as substrate include EPDM, NBR, HNBR, ACM, AEM, FKM, PU, FFKM, and silicone elastomers. Non-limiting examples of thermoplastics that may serve as the substrate include polyolefins, nylons, polyesters, pvc, fluoroplastics, and plastic elastomers (such as thermoplastic polyurethane and thermoplastic elastomers commercially available under the Hytrel®, Pebax®, Santoprene®, Pellethane®, and Kraton® tradenames). The tie-layer is made of a silane adhesive that can bond a cured fluorocarbon elastomer composition and the elastomer/thermoplastic layer.

The single screw extruder that provides partially cured thermoplastic vulcanizate to the co-extrusion die may also be supplied directly from the double barrel twin-screw extruder used to produce the thermoplastic vulcanizate in a continuous process. If desired, the output of the twin-screw extruder may be used directly for input into the multi-layer extrusion die of the co-extrusion apparatus, without first cooling a strand of the partially cured thermoplastic vulcanizate in a water bath. The pelletizing, remelt, and re-extrusion steps can be eliminated by connecting the compounding extruder to the multi-layer extrusion set-up.

### Example 6 - Bonding of Fluorocarbon Elastomer Compositions to Metal Substrates

Example 6A - Bonding of partially cured peroxide curable elastomers

The following ingredients are used: 80 parts Tecnoflon P757 (peroxide curable fluoroelastomer from Solvay); 25 parts Kynar Flex 2500-04 (vinylidene fluoride based thermoplastic from Atofina Chemicals); 5 parts zinc oxide; 10 parts carbon black; and 20 parts of a masterbatch. Melt the Tecnoflon P757 and the Kynar Flex 2500-04 in a batch mixer at 150°C for 5 minutes, while mixing to form a homogeneous mixture. Add the zinc oxide. Add the masterbatch into the batch mixer and mix for 30 seconds (the masterbatch is made in a separate batch mixer at 80°C by mixing 100 parts Tecnoflon P757, 15 parts Luperco 101 XL, and 20 parts of a 75% dispersion of TAIC). Discharge the mixture from the batch mixer, cool it, and chop it into small particles or pellets of about 1-3 mm in size. Pour the pellets in the hopper of an injection molding machine. Heat the injection molding barrel to 150°C. Coat a metal substrate, such as a housing for a seal, with a commercial silane based adhesive according to the manufacturer's instructions. Insert the adhesive coated metal housing into the mold, and inject the molten mixture above the metal housing. The housing may be pre-heated in an oven at about 200°C, or may be heated in the mold before injection. This pre-heating tends to improve the adhesion between the adhesive layer and the fluorocarbon thermoplastic vulcanizate. After injection, the mold is held together under pressure (800-1500 psi) for 1-2 minutes. During this time, the material is fully cured.

Example 6B - comparative example

Example 6B is carried out as in Example 6A, except that mixing of the masterbatch, zinc oxide, Tecnoflon, and Kynar materials is carried out for 3-5 minutes instead of for 30 seconds.

### Example 7

Example 7A - bonding with partially cured bisphenol curable elastomers

The components used are 100 parts Tecnoflon FOR 80HS (a bisphenol curable fluorocarbon elastomer from Solvay, with bisphenol curing agent formulated into the resin); 25 parts Hylar MP-10 (fluoroplastic from Solvay); 3 parts of magnesium oxide; 30 parts of carbon black; 1 part of Struktol WS-280 (processing aid from Struktol); and Tecnoflon FPA-1 (a high temperature processing aid from Solvay). Melt the Tecnoflon FOR 80HS and Hylar MP-10 in a batch mixer for 1 minute at 190°C until the polymers are homogeneously mixed. Add the remaining components, and stir for an additional 1 minute at 190°C until they are well dispersed. Discharge the mixture from the batch mixer, cool, and chop into 1-3 mm pellets. Pour the chopped mixture into an injection molding hopper. Heat the injection molding barrel to 240°C. Insert an adhesive coated metal housing into the mold, and injection mold the mixture above the metal housing. The mold is preheated in an oven or in the mold to about 250°C. After injection, the mold is held together at 80-1500 psi for 3-5 minutes, during which time cure is completed.

Example 7B - comparative

The procedure is the same as for Example 7A, except that the mixing is carried out for 5-10 minutes instead of for 1 minute prior to adding the remaining components.

### Example 8

The procedure is the same as Example 7A, except that the components are 70 parts Dyneon FE840 (an incorporated cure polymer from Ausimont), 30 parts Dyneon BRE 7231X (base resistant elastomer from Dyneon), 25 parts of Hylar MP-10, 6 parts Rhenofit CF (calcium hydroxide from Rhein Chemie), 3 parts magnesium oxide, 1 part Struktol WS-280, 10 parts carbon black, and 1 part Tecnoflon FPA-1.

In all of examples 6-8, after the fluorocarbon elastomeric composition is completely cured in contact with the substrate, the adhesion of the elastomer to the substrate is tested with a tensile testing machine to measure separation strength. Thereafter, the separated areas may be inspected to evaluate the failure mode. The failed area of the composite article prepared by injecting partially cured thermoplastic vulcanizate onto the substrate (Examples 6A, 7A, and 8A) exhibits cohesion failure. This indicates that the elastomeric material itself broke rather than the bond between the elastomer and the substrate. This indicates a relatively high degree of adhesion and bond strength. On the other hand, the failed area of the composite article prepared by injecting a completely cured elastomer (Examples 6B and 7B) shows bond failure. For the fully cured case, most of the elastomer is removed from the substrate during the tensile testing. This indicates a relatively weaker adhesion or bond strength, in that the failure mode was in the bond rather than in the elastomeric material itself. The failure modes may be observed visually and confirmed with microscopic examination, such as with a scanning electron microscope. Further, it is possible to confirm the failure mode by determining element maps of the composite article by EDAX after the tensile test. For example, areas where the elastomer is still attached to the surface of the substrate are characterized by high fluorine content, while the substrates with the adhesive layer are characterized by a relatively high level of silicon. Thereof, element maps of cohesion failed elastomer layers show a high silicone content. The silicon migrates from the silane adhesive layer into the elastomer surface layer to promote adhesion between elastomer and silane adhesive layers at the interface.

## Claims

1. A method of making a composite article comprising:
(a) applying a Partially cured thermoplastic elastomer composition onto a silane adhesive coated substrate, wherein said thermoplastic elastomer composition comprises a discrete phase of a partially cured fluoroelastomer and a continuous phase of a thermoplastic polymeric material; and
(b) curing said partially cured thermoplastic elastomer composition.

2. A method according to Claim 1, wherein the partially cured thermoplastic elastomer composition comprises a partially cured dynamic vulcanizate of a fluoroelastomer and a thermoplastic material.

3. A method according to Claim 1, wherein said fluoroelastomer is a copolymer of vinylidene fluoride.

4. A method according to Claim 1, further comprising forming the partially cured thermoplastic elastomer composition by a process comprising mixing together said fluoroelastomer, said thermoplastic material, and a curing agent while heating to effect partial curing of said fluoroelastomer in the presence of said thermoplastic.

5. A method according to Claim 4, wherein said thermoplastic material comprises a fluoroplastic.

6. A method according to Claim 4, wherein said thermoplastic material comprises a non-fluorine containing thermoplastic.

7. A method according to Claim 4, wherein said thermoplastic material comprises a partially fluorinated thermoplastic.

8. A method according to Claim 4, wherein said curing agent comprises a bisphenol.

9. A method according to Claim 4, wherein said curing agent comprises a peroxide.

10. A method according to Claim 1, wherein said silane adhesive coated substrate comprises a silane adhesive layer on a solid support, and said partially cured composition is applied onto said silane adhesive layer.

11. A method according to Claim 1, wherein said applying process element (a) comprises insertion molding said partially cured composition onto said silane adhesive coated substrate.

12. A method according to Claim 1, wherein said applying process element (a) comprises co-extruding said partially cured composition and said silane adhesive coated substrate.

13. A method of making a polymeric composite article, comprising;
a method according to Claim 2, wherein
(a1) making the partially cured dynamic vulcanizate having a fluoroelastomer discrete phase and a thermoplastic continuous phase;
(a2) co-extruding said partially cured dynamic vulcanizate with a silane adhesive coated substrate; and
(b) completing the cure of said co-extruded partially cured dynamic vulcanizate.

14. A method according to Claim 13, wherein a silane adhesive layer is co-extruded between said partially cured dynamic vulcanizate and said substrate.

15. A method according to Claim 13, wherein a liquid silane adhesive is injected between said partially cured dynamic vulcanizate and said substrate during said co-extrusion process element (a2).

16. A method according to Claim 13, comprising making said partially cured dynamic vulcanizate by a process comprising mixing together a fluoroelastomer resin, a thermoplastic polymeric material, and a curing agent that reacts with said fluoroelastomer resin while heating to cause reaction of said fluoroelastomer resin and curing agent, for a time corresponding to T90 or less of said fluoroelastomer in which T90 is determined as the time, dependent on the reaction temperature, where the viscosity of the reaction mixture increases by 90% of the value it will attain in the fully cured rubber.

17. A method according to Claim 16, wherein said fluoroelastomer resin comprises an uncured copolymer of monomer selected from the group consisting of hexafluoropropylene, vinylidene fluoride, tetrafluoroethylene, and mixtures thereof.

18. A method according to Claim 16, wherein said curing agent comprises a bisphenol.

19. A method according to Claim 16, wherein said curing agent comprises a peroxide.

20. A method for making a composite article according to Claim 10, comprising the partially cured fluoroelastomer composition on a solid metal substrate using a mold, said method comprising:
(a1) applying the silane adhesive layer onto said substrate;
(a2) placing said silane adhesive covered substrate into said mold;
(a3) insertion molding said partially cured elastomer composition to contact said silane adhesive coated substrate in the mold; and (b) completing the cure of said partially cured elastomer composition;
wherein said partially cured elastomer comprises the discrete phase comprising the partially cured fluorocarbon elastomer and
the continuous phase comprising a fluorine containing thermoplastic material.

21. A method according to Claim 20, further comprising making said partially cured elastomer by a process comprising mixing together a fluoroelastomer resin, a thermoplastic polymeric material, and a curing agent that reacts with said fluoroelastomer resin while heating to cause reaction of the resin and curing agent, wherein said resin is **characterized by** a curing time T90, and said curing reaction is carried out for a time less than T90 in which T90 is determined as the time, dependent on the reaction temperature, where the viscosity of the reaction mixture increases by 90% of the value it will attain in the fully cured rubber.

22. A method according to Claim 21, wherein said mixing is carried out in a twin-screw extruder.

23. A method according to Claim 21, wherein said fluoroelastomer resin comprises a copolymer of vinylidene fluoride, hexafluoropropylene, and tetrafluoroethylene.

24. A method according to Claim 21, wherein said curing agent comprises a bisphenol.

25. A method according to Claim 21, wherein said curing agent comprises a peroxide.

26. A method according to Claim 2,comprising:
(a1) feeding a mixture of unmixed fluorocarbon elastomer and thermoplastic material in a first port of a twin screw extruder, wherein the uncured elastomer is **characterized by** a time T90 in which T90 is determined as the time, dependent on the reaction temperature, where the viscosity of the reaction mixture increases by 90% of the value it will attain in the fully cured rubber;
(a2) feeding a curing agent for said fluorocarbon elastomer into a second port of said first port;
(a3) mixing said curing agent, fluorocarbon elastomer, and thermoplastic material in said extruder for a time of T90 or less to make the partially cured thermoplastic vulcanizate of the fluorocarbon elastomer in which T90 is determined as the time, dependent on the reaction temperature, where the viscosity of the reaction mixture increases by 90% of the value it will attain in the fully cured rubber;
(a4) extruding said partially cured thermoplastic vulcanizate from said extruder;
(a5) applying said partially cured thermoplastic vulcanizate onto said silane adhesive coated substrate, and
(b) completing the cure of said partially cured thermoplastic vulcanizate on said silane adhesive coated substrate.

27. A method according to Claim 26, wherein said applying process element (a4) comprises insertion molding said partially cured thermoplastic vulcanizate into a mold containing said silane adhesive coated substrate.

28. A method according to Claim 26, comprising co-extruding said partially cured thermoplastic vulcanizate with said silane adhesive coated substrate.

29. A method according to Claim 26, wherein said fluorocarbon elastomer comprises a copolymer of vinylidene fluoride, hexafluoropropylene, and tetrafluoroethylene.

30. A method according to Claim 26, wherein said curing agent comprises a bisphenol.

31. A method according to Claim 26, wherein said curing agent comprises a peroxide.

32. A method according to Claim 26, wherein said thermoplastic material comprises a fluoroplastic.

33. A method according to Claim 26, wherein said thermoplastic material comprises a partially fluorinated fluoroplastic.

34. A method according to Claim 26, wherein said thermoplastic material comprises a non-fluorine containing thermoplastic.

35. A method of making a composite article according to Claim 2, comprising:
(a1) dynamically vulcanizing a fluoroelastomer in the presence of a thermoplastic material and curing agent for a time less than that needed to completely cure the fluoroelastomer, to form the partially cured dynamic vulcanizate;
(a2) applying a silane adhesive layer to a solid substrate;
(a3) bringing said partially cured dynamic vulcanizate into contact with said silane adhesive layer; and
(b) completing the curing of said dynamic vulcanizate.

36. A method according to Claim 35, wherein said bringing process element (a3) comprises insertion molding said partially cured dynamic vulcanizate onto said silane adhesive covered substrate.

37. A method according to Claim 36, wherein said substrate is a metal.

38. A method according to Claim 35, wherein said substrate is a plastic.

39. A method according to Claim 38, wherein said bringing process element (a3) comprises co-extruding said partially cured dynamic vulcanizate with said substrate.

40. A method according to Claim 39, wherein said applying process element (a2) and said bringing process element (a3) comprise co-extruding said silane adhesive layer, said partially cured dynamic vulcanizate, and said substrate.

41. A method according to Claim 40, wherein said silane adhesive layer is applied during said co-extrusion with a liquid continuous injection unit.

42. A method according to Claim 35, wherein said curing agent comprises a bisphenol.

43. A method according to Claim 35, wherein said curing agent comprises a peroxide.

## Patentansprüche

1. Verfahren zur Herstellung eines Verbundartikels, umfassend:
(a) das Aufbringen einer teilweise gehärteten thermoplastischen Elastomerzusammensetzung auf ein Silanklebstoff-beschichtetes Substrat, wobei die thermoplastische Elastomerzusammensetzung eine diskrete Phase eines teilweise gehärteten Fluorelastomeren und eine kontinuierliche Phase eines thermoplastischen polymeren Materials umfasst; und
(b) das Härten der teilweise gehärteten thermoplastischen Elastomerzusammensetzung.

2. Verfahren gemäß Anspruch 1, wobei die teilweise gehärtete thermoplastische Elastomerzusammensetzung ein teilweise gehärtetes dynamisches Vulkanisat aus einem Fluorelastomer und einem thermoplastischen Material umfasst.

3. Verfahren gemäß Anspruch 1, wobei das Fluorelastomer ein Copolymer von Vinylidenfluorid ist.

4. Verfahren gemäß Anspruch 1, weiterhin umfassend das Bilden der teilweise gehärteten thermoplastischen Elastomerzusammensetzung durch ein Verfahren, welches das Vermischen des Fluorelastomeren, des thermoplastischen Materials und eines Härtungsmittels unter Erwärmen, um das teilweise Härten des Fluorelastomeren in Gegenwart des Thermoplasten zu bewirken, umfasst.

5. Verfahren gemäß Anspruch 4, wobei das thermoplastische Material einen Fluorkunststoff umfasst.

6. Verfahren gemäß Anspruch 4, wobei das thermoplastische Material einen kein Fluor enthaltenden Thermoplast umfasst.

7. Verfahren gemäß Anspruch 4, wobei das thermoplastische Material einen teilweise fluorierten Thermoplast umfasst.

8. Verfahren gemäß Anspruch 4, wobei das Härtungsmittel ein Bisphenol umfasst.

9. Verfahren gemäß Anspruch 4, wobei das Härtungsmittel ein Peroxid umfasst.

10. Verfahren gemäß Anspruch 1, wobei das Silanklebstoff-beschichtete Substrat eine Silan-Klebstoffschicht auf einem festen Träger umfasst und die teilweise gehärtete Zusammensetzung auf die Silan-Klebstoffschicht aufgebracht wird.

11. Verfahren gemäß Anspruch 1, wobei das Verfahrenselement des Aufbringens (a) das Insertionsformen der teilweise gehärteten Zusammensetzung auf dem Silanklebstoff-beschichteten Substrat umfasst.

12. Verfahren gemäß Anspruch 1, wobei das Verfahrenselement des Aufbringens (a) das Coextrudieren der teilweise gehärteten Zusammensetzung und des Silanklebstoff-beschichteten Substrats umfasst.

13. Verfahren zur Herstellung eines polymeren Verbundartikels, umfassend:
ein Verfahren gemäß Anspruch 2, wobei
(a1) das teilweise gehärtete dynamische Vulkanisat, das eine diskrete Fluorelastomerphase und eine kontinuierliche thermoplastische Phase aufweist, hergestellt wird;
(a2) das teilweise gehärtete dynamische Vulkanisat mit einem Silanklebstoff-beschichteten Substrat coextrudiert wird; und
(b) das Härten des coextrudierten, teilweise gehärteten dynamischen Vulkanisats vollendet wird.

14. Verfahren gemäß Anspruch 13, wobei eine Silan-Klebstoffschicht zwischen dem teilweise gehärteten dynamischen Vulkanisat und dem Substrat coextrudiert wird.

15. Verfahren gemäß Anspruch 13, wobei ein flüssiger Silan-Klebstoff zwischen dem teilweise gehärteten dynamischen Vulkanisat und dem Substrat während des Verfahrenselements der Coextrusion (a2) injiziert wird.

16. Verfahren gemäß Anspruch 13, umfassend das Herstellen des teilweise gehärteten dynamischen Vulkanisats durch ein Verfahren, umfassend das Vermischen eines Fluorelastomerharzes, eines thermoplastischen polymeren Materials und eines Härtungsmittels, das mit dem Fluorelastomerharz reagiert, unter Erwärmen, um die Reaktion des Fluorelastomerharzes und des Härtungsmittels während eines Zeitraums zu bewirken, welcher T90 oder weniger des Fluorelastomeren entspricht, in dem T90 als die Zeit, in Abhängigkeit von der Reaktionstemperatur, festgelegt ist, in der die Viskosität der Reaktionsmischung um 90% des Wertes zunimmt, den sie in dem vollständig gehärteten Kautschuk erreicht.

17. Verfahren gemäß Anspruch 16, wobei das Fluorelastomerharz ein ungehärtetes Copolymer von Monomer, gewählt aus der Gruppe, die aus Hexafluorpropylen, Vinylidenfluorid, Tetrafluorethylen und Mischungen davon besteht, umfasst.

18. Verfahren gemäß Anspruch 16, wobei das Härtungsmittel ein Bisphenol umfasst.

19. Verfahren gemäß Anspruch 16, wobei das Härtungsmittel ein Peroxid umfasst.

20. Verfahren für die Herstellung eines Verbundartikels gemäß Anspruch 10, umfassend die teilweise gehärtete Fluorelastomerzusammensetzung auf einem festen Metallsubstrat unter Verwendung einer Form, wobei das Verfahren Folgendes umfasst:
(a1) das Aufbringen der Silan-Klebstoffschicht auf das Substrat;
(a2) das Platzieren des Silanklebstoff-beschichteten Substrats in der Form;
(a3) das Insertionsformen der teilweise gehärteten Elastomerzusammensetzung, um das Silanklebstoff-beschichtete Substrat in der Form zu kontaktieren; und
(b) das Vollenden der Härtung der teilweise gehärteten Elastomerzusammensetzung;
wobei das teilweise gehärtete Elastomer die diskrete Phase umfasst, welche das teilweise gehärtete Fluorkohlenstoffelastomer und die ein fluorhaltiges thermoplastisches Material umfassende kontinuierliche Phase umfasst.

21. Verfahren gemäß Anspruch 20, weiterhin umfassend das Herstellen des teilweise gehärteten Elastomeren durch ein Verfahren, welches das Vermischen eines Fluorelastomerharzes, eines thermoplastischen polymeren Materials und eines Härtungsmittels umfasst, das mit dem Fluorelastomerharz reagiert, während erwärmt wird, um die Reaktion des Harzes und Härtungsmittels zu bewirken, wobei das Harz durch eine Härtungszeit T90 **gekennzeichnet** ist und die Härtungsreaktion für eine Zeit von weniger als T90 durchgeführt wird, wobei T90 als die Zeit, in Abhängigkeit von der Reaktionstemperatur, festgelegt ist, in der die Viskosität der Reaktionsmischung um 90% des Wertes zunimmt, den sie in dem vollständig gehärteten Kautschuk erreicht.

22. Verfahren gemäß Anspruch 21, wobei das Mischen in einem Doppelschneckenextruder durchgeführt wird.

23. Verfahren gemäß Anspruch 21, wobei das Fluorelastomerharz ein Copolymer von Vinylidenfluorid, Hexafluorpropylen und Tetrafluorethylen umfasst.

24. Verfahren gemäß Anspruch 21, wobei das Härtungsmittel ein Bisphenol umfasst.

25. Verfahren gemäß Anspruch 21, wobei das Härtungsmittel ein Peroxid umfasst.

26. Verfahren gemäß Anspruch 2, umfassend:
(a1) das Einspeisen einer Mischung von unvermischtem Fluorkohlenstoffelastomer und thermoplastischem Material in eine erste Öffnung eines Doppelschneckenextruders, wobei das ungehärtete Elastomer durch eine Zeit T90 **gekennzeichnet** ist, in welcher T90 als die Zeit, in Abhängigkeit von der Reaktionstemperatur, festgelegt ist, in der die Viskosität der Reaktionsmischung um 90% des Wertes zunimmt, den sie in dem vollständig gehärteten Kautschuk erreicht;
(a2) das Einspeisen eines Härtungsmittels für das Fluorkohlenstoffelastomer in eine zweite Öffnung der ersten Öffnung;
(a3) das Mischen des Härtungsmittels, Fluorkohlenstoffelastomeren und thermoplastischen Materials in dem Extruder für eine Zeit von T90 oder weniger, um das teilweise gehärtete thermoplastische Vulkanisat des Fluorkohlenstoffelastomeren herzustellen, wobei T90 als die Zeit, in Abhängigkeit von der Reaktionstemperatur, festgelegt ist, in der die Viskosität der Reaktionsmischung um 90% des Wertes zunimmt, den sie in dem vollständig gehärteten Kautschuk erreicht;
(a4) das Extrudieren des teilweise gehärteten thermoplastischen Vulkanisats aus dem Extruder;
(a5) das Aufbringen des teilweise gehärteten thermoplastischen Vulkanisats auf das Silanklebstoff-beschichtete Substrat; und
(b) das Vollenden des Härtens des teilweise gehärteten thermoplastischen Vulkanisats auf dem Silanklebstoff-beschichteten Substrat.

27. Verfahren gemäß Anspruch 26, wobei das Aufbringungsverfahrenselement (a4) das Insertionsformen des teilweise gehärteten thermoplastischen Vulkanisats in einer das Silanklebstoff-beschichtete Substrat enthaltenden Form umfasst.

28. Verfahren gemäß Anspruch 26, umfassend das Coextrudieren des teilweise gehärteten thermoplastischen Vulkanisats mit dem Silanklebstoff-beschichteten Substrat.

29. Verfahren gemäß Anspruch 26, wobei das Fluorkohlenstoffelastomer ein Copolymer von Vinylidenfluorid, Hexafluorpropylen und Tetrafluorethylen umfasst.

30. Verfahren gemäß Anspruch 26, wobei das Härtungsmittel ein Bisphenol umfasst.

31. Verfahren gemäß Anspruch 26, wobei das Härtungsmittel ein Peroxid umfasst.

32. Verfahren gemäß Anspruch 26, wobei das thermoplastische Material einen Fluorkunststoff umfasst.

33. Verfahren gemäß Anspruch 26, wobei das thermoplastische Material einen teilweise fluorierten Fluorkunststoff umfasst.

34. Verfahren gemäß Anspruch 26, wobei das thermoplastische Material einen kein Fluor enthaltenden Thermoplast umfasst.

35. Verfahren zur Herstellung eines Verbundartikels gemäß Anspruch 2, umfassend:
(a1) das dynamische Vulkanisieren eines Fluorelastomeren in Gegenwart eines thermoplastischen Materials und Härtungsmittels für eine Zeit von weniger als derjenigen, die zum vollständigen Härten des Fluorelastomeren benötigt wird, um das teilweise gehärtete dynamische Vulkanisat zu bilden;
(a2) das Aufbringen einer Silan-Klebstoffschicht auf ein festes Substrat;
(a3) das In-Kontakt-Bringen des teilweise gehärteten dynamischen Vulkanisats mit der Silan-Klebstoffschicht; und
(b) das Vollenden des Härtens des dynamischen Vulkanisats.

36. Verfahren gemäß Anspruch 35, wobei das Verfahrenselement des (In-Kontakt)-Bringens (a3) das Insertionsformen des teilweise gehärteten dynamischen Vulkanisats auf dem Silanklebstoff-beschichteten Substrat umfasst.

37. Verfahren gemäß Anspruch 36, wobei das Substrat ein Metall ist.

38. Verfahren gemäß Anspruch 35, wobei das Substrat ein Kunststoff ist.

39. Verfahren gemäß Anspruch 38, wobei das Verfahrenselement des (In-Kontakt)-Bringens (a3) das Coextrudieren des teilweise gehärteten dynamischen Vulkanisats mit dem Substrat umfasst.

40. Verfahren gemäß Anspruch 39, wobei das Verfahrenselement des Aufbringens (a2) und das Verfahrenselement des (In-Kontakt)-Bringens (a3) das Coextrudieren der Silan-Klebstoffschicht, des teilweise gehärteten dynamischen Vulkanisats und des Substrats umfassen.

41. Verfahren gemäß Anspruch 40, wobei die Silan-Klebstoffschicht während der Coextrusion mit einer kontinuierlichen Flüssigkeit-Einspritzeinheit aufgebracht wird.

42. Verfahren gemäß Anspruch 35, wobei das Härtungsmittel ein Bisphenol umfasst.

43. Verfahren gemäß Anspruch 35, wobei das Härtungsmittel ein Peroxid umfasst.

## Revendications

1. Procédé de fabrication d'un article composite comprenant les étapes consistant à :
(a) appliquer une composition élastomère thermoplastique partiellement réticulée sur un substrat revêtu d'adhésif à base de silane, dans lequel ladite composition élastomère thermoplastique comprend une phase discrète d'un fluoroélastomère partiellement réticulé et une phase continue d'un matériau polymère thermoplastique ; et
(b) réticuler ladite composition élastomère thermoplastique partiellement réticulée.

2. Procédé selon la revendication 1, dans lequel la composition élastomère thermoplastique partiellement réticulée comprend un vulcanisat dynamique partiellement réticulé d'un fluoroélastomère et d'un matériau thermoplastique.

3. Procédé selon la revendication 1, dans lequel ledit fluoroélastomère est un copolymère de fluorure de vinylidène.

4. Procédé selon la revendication 1, comprenant en outre la formation de la composition élastomère thermoplastique partiellement réticulée par un procédé consistant à mélanger ensemble ledit fluoroélastomère, ledit matériau thermoplastique et un agent de réticulation, tout en chauffant pour effectuer la réticulation partielle dudit fluoroélastomère en présence dudit thermoplastique.

5. Procédé selon la revendication 4, dans lequel ledit matériau thermoplastique comprend un fluoro-plastique.

6. Procédé selon la revendication 4, dans lequel ledit matériau thermoplastique comprend un thermoplastique non fluoré.

7. Procédé selon la revendication 4, dans lequel ledit matériau thermoplastique comprend un thermoplastique partiellement fluoré.

8. Procédé selon la revendication 4, dans lequel ledit agent de réticulation comprend un bisphénol.

9. Procédé selon la revendication 4, dans lequel ledit agent de réticulation comprend un peroxyde.

10. Procédé selon la revendication 1, dans lequel ledit substrat revêtu d'adhésif à base de silane comprend une couche d'adhésif à base de silane sur un support solide, et ladite composition partiellement réticulée est appliquée sur ladite couche d'adhésif à base de silane.

11. Procédé selon la revendication 1, dans lequel l'élément (a) dudit procédé d'application comprend le moulage par insertion de ladite composition partiellement réticulée sur ledit substrat revêtu d'adhésif à base de silane.

12. Procédé selon la revendication 1, dans lequel l'élément (a) dudit procédé d'application comprend la co-extrusion de ladite composition partiellement réticulée et dudit substrat revêtu d'adhésif à base de silane.

13. Procédé de fabrication d'un article composite polymère, comprenant un procédé selon la revendication 2, dans lequel sont effectuées les étapes suivantes :
(a1) la fabrication du vulcanisat dynamique partiellement réticulé comportant une phase discrète fluoroélastomère et une phase continue thermoplastique ;
(a2) la co-extrusion dudit vulcanisat dynamique partiellement réticulé avec un substrat revêtu d'adhésif à base de silane ; et
(b) l'achèvement de la réticulation dudit vulcanisat dynamique co-extrudé partiellement réticulé.

14. Procédé selon la revendication 13, dans lequel une couche d'adhésif à base de silane est co-extrudée entre ledit vulcanisat dynamique partiellement réticulé et ledit substrat.

15. Procédé selon la revendication 13, dans lequel un adhésif à base de silane liquide est injecté entre ledit vulcanisat dynamique partiellement réticulé et ledit substrat pendant l'élément (a2) dudit procédé de co-extrusion.

16. Procédé selon la revendication 13, comprenant la fabrication dudit vulcanisat dynamique partiellement réticulé par un procédé consistant à mélanger ensemble une résine fluoroélastomère, un matériau polymère thermoplastique et un agent de réticulation qui réagit avec ladite résine fluoroélastomère, tout en chauffant pour provoquer la réaction de ladite résine fluoroélastomère et dudit agent de réticulation, pendant une durée correspondant au T90 ou moins dudit fluoroélastomère, T90 étant déterminé comme étant le temps, en fonction de la température réactionnelle, durant lequel la viscosité du mélange réactionnel augmente de 90% de la valeur qu'elle atteindra dans le caoutchouc entièrement réticulé.

17. Procédé selon la revendication 16, dans lequel ladite résine fluoroélastomère comprend un copolymère non réticulé de monomère choisi dans le groupe constitué par l'hexafluoropropylène, le fluorure de vinylidène, le tétrafluoroéthylène, et des mélanges de ceux-ci.

18. Procédé selon la revendication 16, dans lequel ledit agent de réticulation comprend un bisphénol.

19. Procédé selon la revendication 16, dans lequel ledit agent de réticulation comprend un peroxyde.

20. Procédé de fabrication d'un article composite selon la revendication 10, comprenant la composition fluoroélastomère partiellement réticulée sur un substrat métallique solide au moyen d'un moule, ledit procédé comprenant les étapes consistant à :
(a1) appliquer la couche d'adhésif à base de silane sur ledit substrat ;
(a2) placer ledit substrat recouvert d'adhésif à base de silane dans ledit moule ;
(a3) mouler par insertion ladite composition élastomère partiellement réticulée pour la mettre en contact avec ledit substrat revêtu d'adhésif à base de silane dans le moule ; et
(b) achever la réticulation de ladite composition élastomère partiellement réticulée ;
dans lequel ledit élastomère partiellement réticulé comprend une phase discrète comprenant l'élastomère fluorocarboné partiellement réticulé et une phase continue comprenant un matériau thermoplastique fluoré.

21. Procédé selon la revendication 20, comprenant en outre la fabrication dudit élastomère partiellement réticulé par un procédé consistant à mélanger ensemble une résine fluoroélastomère, un matériau polymère thermoplastique et un agent de réticulation qui réagit avec ladite résine fluoroélastomère, tout en chauffant pour provoquer la réaction de la résine et de l'agent de réticulation, dans lequel ladite résine est **caractérisée par** un temps de réticulation T90, et ladite réaction de réticulation est réalisée pendant une durée inférieure à T90, T90 étant déterminé comme étant le temps, en fonction de la température réactionnelle, durant lequel la viscosité du mélange réactionnel augmente de 90% de la valeur qu'elle atteindra dans le caoutchouc entièrement réticulé.

22. Procédé selon la revendication 21, dans lequel ledit mélange est réalisé dans une extrudeuse à deux vis.

23. Procédé selon la revendication 21, dans lequel ladite résine fluoroélastomère comprend un copolymère de fluorure de vinylidène, d'hexafluoropropylène et de tétrafluoroéthylène.

24. Procédé selon la revendication 21, dans lequel ledit agent de réticulation comprend un bisphénol.

25. Procédé selon la revendication 21, dans lequel ledit agent de réticulation comprend un peroxyde.

26. Procédé selon la revendication 2, comprenant les étapes consistant à :
(a1) introduire un mélange d'élastomère fluorocarboné non mélangé et de matériau thermoplastique dans un premier orifice d'un extrudeuse à deux vis, dans lequel l'élastomère non réticulé est **caractérisé par** un temps T90, T90 étant déterminé comme étant le temps, en fonction de la température réactionnelle, durant lequel la viscosité du mélange réactionnel augmente de 90% de la valeur qu'elle atteindra dans le caoutchouc entièrement réticulé ;
(a2) introduire un agent de réticulation pour ledit élastomère fluorocarboné dans un second orifice dudit premier orifice;
(a3) mélanger ledit agent de réticulation, l'élastomère fluorocarboné et le matériau thermoplastique dans ladite extrudeuse pendant une durée de T90 ou moins pour fabriquer le vulcanisat thermoplastique partiellement réticulé de l'élastomère fluorocarboné, T90 étant déterminé comme étant le temps, en fonction de la température réactionnelle, durant lequel la viscosité du mélange réactionnel augmente de 90% de la valeur qu'elle atteindra dans le caoutchouc entièrement réticulé ;
(a4) extruder ledit vulcanisat thermoplastique partiellement réticulé de ladite extrudeuse ;
(a5) appliquer ledit vulcanisat thermoplastique partiellement réticulé sur ledit substrat revêtu d'adhésif à base de silane, et
(b) achever la réticulation dudit vulcanisat thermoplastique partiellement réticulé sur ledit substrat revêtu d'adhésif à base de silane.

27. Procédé selon la revendication 26, dans lequel l'élément (a4) dudit procédé d'application comprend le moulage par insertion dudit vulcanisat thermoplastique partiellement réticulé dans un moule contenant ledit substrat revêtu d'adhésif à base de silane.

28. Procédé selon la revendication 26, comprenant la co-extrusion dudit vulcanisat thermoplastique partiellement réticulé avec ledit substrat revêtu d'adhésif à base de silane.

29. Procédé selon la revendication 26, dans lequel ledit élastomère fluorocarboné comprend un copolymère de fluorure de vinylidène, d'hexafluoropropylène et de tétrafluoroéthylène.

30. Procédé selon la revendication 26, dans lequel ledit agent de réticulation comprend un bisphénol.

31. Procédé selon la revendication 26, dans lequel ledit agent de réticulation comprend un peroxyde.

32. Procédé selon la revendication 26, dans lequel ledit matériau thermoplastique comprend un fluoro-plastique.

33. Procédé selon la revendication 26, dans lequel ledit matériau thermoplastique comprend un fluoro-plastique partiellement fluoré.

34. Procédé selon la revendication 26, dans lequel ledit matériau thermoplastique comprend un thermoplastique non fluoré.

35. Procédé de fabrication d'un article composite selon la revendication 2, comprenant les étapes consistant à :
(a1) effectuer la vulcanisation dynamique d'un fluoroélastomère en présence d'un matériau thermoplastique et d'un agent de réticulation pendant une durée inférieure à celle nécessaire pour durcir complètement le fluoroélastomère, pour former le vulcanisat dynamique partiellement réticulé ;
(a2) appliquer une couche d'adhésif à base de silane sur un substrat solide;
(a3) amener ledit vulcanisat dynamique partiellement réticulé en contact avec ladite couche d'adhésif à base de silane; et
(b) achever la réticulation dudit vulcanisat dynamique.

36. Procédé selon la revendication 35, dans lequel l'élément (a3) de mise en contact dudit procédé comprend le moulage par insertion dudit vulcanisat dynamique partiellement réticulé sur ledit substrat recouvert d'adhésif à base de silane.

37. Procédé selon la revendication 36, dans lequel ledit substrat est un métal.

38. Procédé selon la revendication 35, dans lequel ledit substrat est un plastique.

39. Procédé selon la revendication 38, dans lequel l'élément (a3) de mise en contact dudit procédé comprend la co-extrusion dudit vulcanisat dynamique partiellement réticulé avec ledit substrat.

40. Procédé selon la revendication 39, dans lequel l'élément (a2) d'application dudit procédé et l'élément (a3) de mise en contact dudit procédé comprennent la co-extrusion de ladite couche d'adhésif à base de silane, dudit vulcanisat dynamique partiellement réticulé et dudit substrat.

41. Procédé selon la revendication 40, dans lequel ladite couche d'adhésif à base de silane est appliquée pendant ladite co-extrusion avec une unité d'injection continue de liquide.

42. Procédé selon la revendication 35, dans lequel ledit agent de réticulation comprend un bisphénol.

43. Procédé selon la revendication 35, dans lequel ledit agent de réticulation comprend un peroxyde.
